# EUROPEAN PATENT APPLICATION

(11) **EP 1 385 143 A2**
(43) Date of publication of application: **28.01.2004**
(21) Application number: 03254654.1
(22) Date of filing: 15.07.2003
(51) Int. Cl.: G09G 5/02

(54) **Method and apparatus for improved transform functions for non gamma corrected graphics systems**

(30) Priority: 16.07.2002 US 396874 P
(71) Applicant: ATI Technologies Inc., Markham, Ontario L3T 7X6 (CA)
(72) Inventor: Leather, Mark M., Markham Ontario L3T 7X6 (CA); Elder, Gordon M., Markham Ontario L3T 7X6 (CA)
(74) Representative: Howe, Steven

(57) **Abstract**

The present invention provides a solution to the problems of performing transformation functions, e.g. antialiasing, blending or filtering operations on data originating in gamma space and part of systems that do not use, or are not intended to use, gamma correction schemes. The invention provides additional stages to a transform block used by a transform function. In the scheme of the invention, each input sample has a degamma function (inverse gamma) applied to it to transform it from gamma space to linear space, prior to the transform block. The degamma function is such as to approximate the transfer function of a typical monitor. After the transform operation is applied at the transform block to produce a result, a gamma function is applied to the result to return the sample to gamma space so that the output sample is ready for further processing e.g. display on a monitor.

## Description

The present invention relates to the field of transform functions in graphics processing.

Portions of the disclosure of this patent document contain material that is subject to copyright protection. The copyright owner has no objection to the facsimile reproduction by anyone of the patent document or the patent disclosure as it appears in the Patent and Trademark Office file or records, but otherwise reserves all rights whatsoever.

Colors on a computer display are produced by the computer through a series of graphics instructions that result in a blend of primary colors to produce a desired color. In many systems, the generated color does not look as intended on a computer display due to the nature of the relationship between the monitor and the signals provided to it by the computer system. Although correcting schemes are available, many computer programmers do not take advantage of them. One result of this situation is a lack of optimal effect when performing certain data transform functions. This problem can be better understood by a review of how computers generate images on a display.

Computer display images are made up of thousands of tiny dots, where each dot is one of thousands or millions of colors. These dots are known as picture elements, or "pixels". Each pixel has a color, with the color of each pixel being represented by a number value stored in the computer system. As is well known in the art, any color can be represented as a mixture of the three primary colors red, green, and blue (RGB). In typical systems, a pixel is described by three color components and an intensity component referred to as an "alpha" component. Systems that use this scheme are often called RGBA systems.

A three dimensional display image, although displayed using a two dimensional array of pixels, may in fact be created by the rendering of a plurality of graphical objects. Examples of graphical objects include points, lines, polygons, and three dimensional solid objects. Points, lines, and polygons represent rendering "primitives" which are the basis for most rendering instructions. More complex structures, such as three dimensional objects, are formed from a combination or mesh of such primitives. To display a particular scene, the visible primitives associated with the scene are drawn individually by determining those pixels that fall within the edges of the primitive, and obtaining the attributes (e.g. color, intensity, texture) of the primitive that correspond to each of those pixels. The obtained attributes are used to determine the displayed color values of applicable pixels.

Sometimes, a three dimensional display image is formed from overlapping primitives or surfaces. A blending function based on an opacity value associated with each pixel of each primitive is used to blend the colors of overlapping surfaces or layers when the top surface is not completely opaque. The final displayed color of an individual pixel may thus be a blend of colors from multiple surfaces or layers.

In some cases, graphical data is rendered by executing instructions from an application that is drawing data to a display. During image rendering, three dimensional data is processed into a two dimensional image suitable for display. The three dimensional image data represents attributes such as color, opacity, texture, depth, and perspective information. The draw commands from a program drawing to the display may include, for example, X and Y coordinates for the vertices of the primitive, as well as some attribute parameters for the primitive (color and depth or "Z" data), and a drawing command. The execution of drawing commands to generate a display image is known as graphics processing.

The display of a computer system is thought of as a "frame" in which an image is presented. A computer display has a fixed number of display pixels arranged in an array. A typical display may have 1,024 columns of pixels in 768 rows for a total of 786,432 pixels. Each display pixel is represented by and associated with a memory location in a memory device known as a "frame buffer". The frame buffer stores the attribute information for each pixel on the display in that pixel's corresponding memory location. The contents of the frame buffer are provided to a digital to analog converter (DAC) to produce an analog signal used to drive the electron gun of a CRT display and energize the appropriate pixel location to display the desired pixel.

There is a problem that arises in this system due to the nonlinear relationship between the signals provided to the display monitor and the performance of the monitor itself. The DAC output is an intensity signal that varies from 0 (no intensity) to 1 (full intensity). The signal is provided to the monitor to generate a voltage output from the monitor's electron gun. The problem is that the intensity/voltage response curve is not linear. In other words, if the intensity signal is .5, the output of the monitor is not half intensity but something much less than half. Until images get very bright (high intensity) they look much darker than expected. The relationship between intensity signal and output voltage is known as the "gamma" of a monitor. The prior art has created a number of gamma correction schemes to solve the problems presented by this nonlinear response.

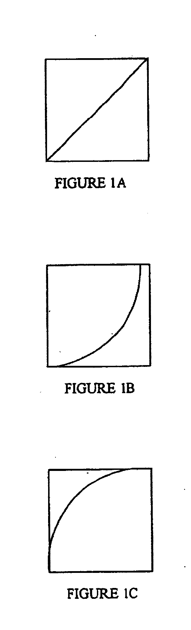

The simplest solution is to gamma correct the input data to a monitor prior to providing it to the monitor. This consists of applying a function to the data and is described by referring to Figures 1A through 1C. Figure 1A is a graph of the input to a monitor from the frame buffer DAC. As you can see, the signal is linear. Figure 1B is the actual response of a typical monitor to input. The graph shows that there is an exponential relationship Iⁿ where I is intensity and n is a value between 2 and 2.5 depending on the monitor (a typical value of n is 2.2). Taking, for example, an input of 5 intensity, the actual output on the display will only be .5^{2.2}, or 0.218. This is less than one fourth of the maximum intensity, instead of the desired one half.

Figure 1C illustrated a gamma correction curve that can be applied to the intensity signal prior to sending it to the monitor. The curve is the inverse of the gamma curve of Figure 1B, or I^{1/n}. By correcting the signal with a function corresponding to the curve of Figure 1C, the output of the monitor will have a more linear relationship as illustrated in Figure 1A..

Many graphics systems and computer systems currently include some type of gamma correction. However, often the gamma correction is not used. One reason for this is that the use of gamma correction can provide undesired results in certain conditions. For example, when there is a gradient of intensity in an image, the use of gamma correction can result in "banding" of the image instead of a smooth transition. By disabling gamma correction, this banding effect can be avoided. To avoid the need for gamma correction, many graphics developers work in a pre-gamma corrected environment where the colors and intensities are determined taking into account the nonlinearity of the output monitor. This is referred to as working in the "gamma space". Non pre-gamma corrected data is referred to as being in the "linear space".

Although this pre-gamma coding, non-gamma corrected environment provides a solution for the banding problem, it creates a problem in the data transform stages of a graphics processing system. One transform, for example, is the antialiasing stage of graphics processing.

Aliasing refers to a set of visual artifacts caused by the discrete sampling of an image at fixed sample positions (i.e. pixel positions). A typical artifact includes "staircasing" of lines, edges, and boundaries where, instead of a straight edge, a stepped edge results. A problem arises because current antialiasing techniques operate in linear space while the data is in gamma space.

One technique is referred to as "supersampling". This consists of rendering the scene at a greater magnification (e.g. 2x, 3x, etc.) of the intended output resolution. The image is then downfiltered to provide the final output image.

Another technique is known as "multisampling" and involves rendering the image at the desired output resolution. A number of values are generated for each pixel at different sample points scattered uniformly throughout the pixel. These values are then filtered to determine the final output pixel color.

Each of these methods result in poor antialiasing because of the lack of compensation for the gamma space of the samples. Consider, for example, a two sample multisample method used on a black/white edge resulting in samples used having levels at 0% and 100%. In this simple example the filter operation would average the two values with a result of 50%. The actual output on the display would be 21.8%, an intensity much lower than the desired 50% intensity. A second example is a two sample multisample method used on a black/grey edge resulting in samples used having levels at 0% and 50%. The filter operation would average the two values with a result of 25%. The actual output on the display would be 4.7%, an intensity much lower than the desired 25% intensity.

There are other transform functions that operate at less than optimal effect when performed on gamma space data, including some blending operations and some texture operations.

The present invention provides a solution to the problems of performing transformation functions on data originating in gamma space and part of systems that do not use, or are not intended to use, gamma correction schemes. The invention provides additional stages to a transform block used by a transform function. In the scheme of the invention, each input sample has a degamma function (inverse gamma) applied to it to transform it from gamma space to linear space, prior to the transform block. The degamma function is such as to approximate the transfer function of a typical monitor. After the transform operation is applied at the transform block to produce a result, a gamma function is applied to the result to return the sample to gamma space so that the output sample is ready for further processing.

The present invention will be described, by way of example, with reference to the accompanying drawings in which:
Figures 1A through 1C illustrated possible signal to voltage relationships in a computer display system;
Figure 2 is a block diagram of an embodiment of the present invention;
Figure 3 is a block diagram of an alternate embodiment of the invention; and
Figure 4 is a block diagram of another embodiment of the invention.

The present invention provides improved transformations of gamma space data. In the following description, numerous specific details are set forth to provide a more thorough description of embodiments of the invention. It is apparent, however, to one skilled in the art, that the invention may be practiced without these specific details. In other instances, well known features have not been described in detail so as not to obscure the invention.

The present invention provides a method of accomplishing transformations in a graphics and display system that does not use gamma correction of pixels before providing them to a display. In the preferred embodiment of this invention, pixel data is pre-gamma corrected (i.e. in gamma space).

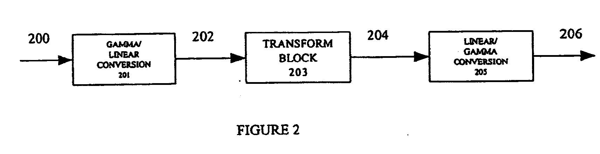

Figure 2 is a block diagram of one embodiment of the present invention. Image data 200 in gamma space is provided to a gamma/linear conversion block 201 where it is transformed into linear space. This linear space data 202 is then provided to transformation block 203. The transformation block is a block that operates a transform function of some type on the linear space image data. The transformed data 204 is then converted back to gamma space in linear/gamma conversion block 205 for use by other parts of the graphics processing system. Examples of the transform operation that can be applied to image data and used with the present invention include antialiasing steps, blending operations, filtering operations, and other convolving steps that operate more effectively in linear space than in gamma space.

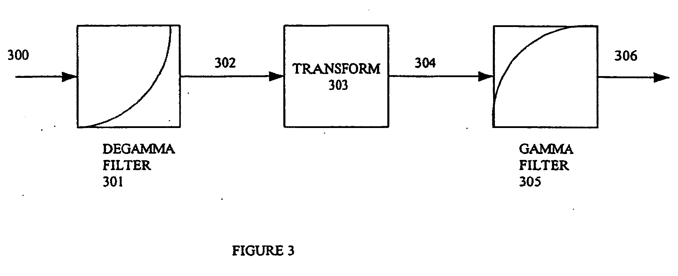

Another embodiment of the invention is illustrated in the block diagram of Figure 3. Image data samples 300 are provided to degamma filter 301. The degamma filter implements the gamma function of the monitor associated with the graphics processing system and converts the image data samples from gamma space to linear space. The linear space data is then provided to transform block 303 for application of the desired transform function. The linear space output 304 is then provided to gamma correction block 305 where it is converted back to gamma space.

Another embodiment of the present invention provides conversion of gamma space data to linear space data for a resolving operation that is part of an antialiasing operation. Resolving is a step in graphics processing that is used to determine the color of a pixel which may have two or more graphics primitives falling within the boundaries of the pixel. The technique of multisampling consists in part of taking a number of samples from within a pixel and resolving them to a single color. The theory is that by taking multiple samples, the primitive having the most area of the pixel will have the most samples, and thus will have the greatest impact on the final resolved color of the pixel when displayed. In one resolve system, the multisamples are provided to a sum and divide unit to average the samples and provide the desired output color.

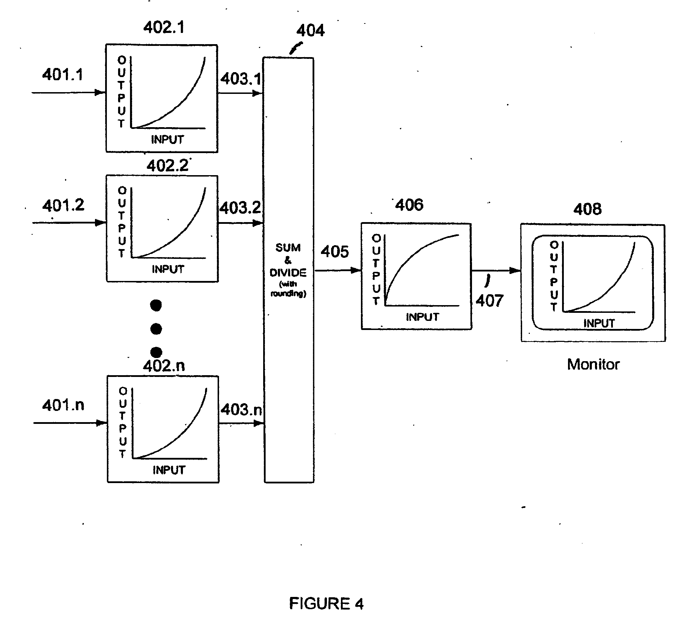

In one embodiment of the present invention, the samples are converted from gamma space to linear space prior to the sum and divide operation. The output of that operation is then converted back to the gamma space and provided to a monitor for display. An example of one embodiment of the invention is illustrated in Figure 4.

Referring to Figure 4, a plurality of samples 400.1, 400.2 through 400.n are taken from a pixel for the multisampling process. Each sample is passed through one of filters 401.1, 401.2, through 401.n to transform it from gamma space to linear space. In the preferred embodiment this is accomplished via a degamma correction filter that has a transformation function that is the approximates the gamma function of a monitor. Consider, for example, a monitor with a gamma function of 2.2. Each sample x is transformed by applying x^{2.2} function. The outputs of the filters are linear space values 402.1, 402.2, through 402.n and are provided to the sum and divide block 403.

In block 403 the samples are summed together and then divided to define the color and intensity of the pixel to be displayed. As noted above, the conversion to linear space provides for more accurate antialiasing by avoiding stepped and inaccurate transitions. The block 403 in one embodiment employs rounding to the sample sums.

The output 404 of the sum and divide block 403 is a linear space value that is then converted back to gamma space before providing it to a monitor for display. This is accomplished via gamma correction filter 405 which applies the inverse of the gamma effect of the monitor, such as by using function x^{1/2.2} (where the gamma of the monitor is 2.2, for example). The result of this step is a gamma space value 406 which can then be provided to monitor 407 for display.

Although not shown, there may be a frame buffer used to store the output 406 prior to providing the values to monitor 407. The gamma and degamma filters can be implemented via lookup tables. The lookup tables can be configured for gamma values of between 1.0 (no correction) and 2.5.

In an alternate embodiment of the invention the incoming samples are 8 bit samples but the degamma tables are designed so that 10 bit outputs are produced. The resolve block (sum and divide) works in 10 bit space and the gamma correction provides an 8 bit output.

A bypass loop can be included in any of the embodiments to reduce the need for transform processing. When all of the pixel samples provided to the transform block (such as to the sum and divide block) are the same, there is no need to perform the transform operation. In such a case, the transform operation can be skipped and the data simply passed through. Other variations can bypass the entire gamma space to linear space to gamma space conversion as well. One environment where this can be used is where there is a compression scheme that only sends unique samples. If only one sample is provided, it means that all of the samples are the same and no transform function is applied (the bypass is enabled).

Thus, a scheme for optimizing transform functions in non-gamma correction enabled graphics systems has been described.

## Claims

1. A system for performing transform operations comprising:
a first conversion block (201; 301; 402) for receiving a pixel sample (200, 300; 401) and for converting the pixel sample (200; 300; 401) from a gamma space to a linear space;
a transform function block (203; 303; 404) coupled to the first conversion block (201; 301; 402) for transforming the pixel sample into an output pixel sample (204; 304; 405)
a second conversion block (205; 305; 406) coupled to the transform function block (203; 303; 404) for converting the output pixel sample (204; 304; 405) from linear space to gamma space.

2. The system of claim 1, wherein the first conversion block (301) comprises a degamma filter.

3. The system of claim 2, wherein the degamma filter (301) implements a function x^{gamma} where x is the sample value.

4. The system of claim 2 or claim 3, wherein the degamma filter (301) is implemented using a lookup table.

5. The system of any one of claims 2 to 4, wherein the number of bits of output of the degamma filter (301) is greater than the number of bits of input.

6. The system of any one of the preceding claims, wherein the second conversion block (305) is a gamma correction filter.

7. The system of claim 6, wherein the gamma correction filter (305) implements a function x^{1/gamma} where x is the output pixel value.

8. The system of claim 6 or claim 7, wherein the gamma correction filter (305) is implemented using a lookup table.

9. The system of any one of claims 6 to 8, wherein the gamma correction filter (305) provides an output of fewer bits than the input to the gamma correction filter (305).

10. The system of any one of the preceding claims, wherein the transform function block (203; 303;404) is an antialiasing filter.

11. The system of claim 10, wherein the antialiasing filter (404) is implemented as a sum and divide operation.

12. The system of any one of the preceding claims, wherein the transform function block (203; 303) executes a blend function.

13. The system of any one of the preceding claims, including a plurality of first conversion blocks (402) for receiving a plurality of pixel samples (401) and for converting the plurality of pixel samples (401) from gamma space to linear space.

14. A method for performing transform operations comprising:
receiving a pixel sample (200, 300; 401);
converting said pixel sample (200, 300; 401) from a gamma space to a linear space; transforming said pixel sample into an output pixel sample (204; 304; 405); and, converting said output pixel sample (204; 304; 405) from linear space to gamma space.

15. The method of claim 14, wherein the step of converting the pixel sample uses a degamma filter (301).

16. The method of claim 15, wherein the degamma filter (301) implements a function x^{gamma} where x is the sample value.

17. The method of claim 15 or claim 16, wherein the degamma filter (301) is implemented using a lookup table.

18. The method of any one of claims 15 to 17, wherein the number of bits of output of the degamma filter (301) is greater than the number of bits of input.

19. The method of any one of claims 14 to 18, wherein the step of converting the output pixel sample (204; 304; 405) uses a gamma correction filter (305).

20. The method of claim 19, wherein the gamma correction filter (305) implements a function x^{1/gamma} where x is the output pixel value.

21. The method of claim 20, wherein the gamma correction filter (305) is implemented using a lookup table.

22. The method of claim 20 or claim 21, wherein the gamma correction filter (305) provides an output of fewer bits than the input to the gamma correction filter (305).

23. The method of any one of claims 14 to 22, wherein the step of transforming uses an antialiasing filter (404).

24. The method of claim 23, wherein the antialiasing filter (404) is implemented as a sum and divide operation.

25. The method of any one of claims 14 to 24, wherein the step of transforming executes a blend function.
